# EUROPÄISCHE PATENTANMELDUNG

(11) **EP 2 140 829 A1**
(43) Veröffentlichungstag der Anmeldung: **06.01.2010**
(21) Anmeldenummer: 08012081.9
(22) Anmeldetag: 04.07.2008
(51) Int. Cl.: A61C 5/06

(54) **Medizinisches Handstück zur Abgabe von Füllmasse**

(71) Anmelder: W & H Dentalwerk Bürmoos GmbH, 5111 Bürmoos (AT)
(72) Erfinder: Wagner, Hannes, 5023 Salzburg (AT)
(74) Vertreter: Benda, Ralf

(57) **Zusammenfassung**

Es wird ein medizinisches, insbesondere dentales, Handstück (1) zur Abgabe von Füllmasse offenbart, das eine Anschlussvorrichtung (2) für einen Behälter mit Füllmasse, eine Schwingeinheit (3) zur Erzeugung und Übertragung von Schwingungen auf die Füllmasse und eine Fördervorrichtung (4, 4') zur Förderung der Füllmasse aus dem Behälter umfasst. Die Schwingeinheit (3) weist einen Schwingungserreger (5) und eine Sonotrode (6) auf, wobei die Sonotrode (6) und die Anschlussvorrichtung (2) zum Fördern der Füllmasse aus dem Füllmassebehäfter relativ zueinander verschiebbar sind.

Es wird des Weiteren ein Handstück (1) zur Abgabe von Füllmasse beschrieben, dessen Schwingeinheit (3) in einem automatisierten Betriebsmodus zur gepulsten Leistungsabgabe auf die Füllmasse betreibbar ist.

## Beschreibung

Die vorliegende Erfindung betrifft ein medizinisches, insbesondere dentales, Handstück zur Abgabe von Füllmasse mit einem Schwingungserreger zur Übertragung von Schwingungen auf die Füllmasse.

Ein derartiges Handstück ist zum Beispiel aus der Patentanmeldung WO 2006/136398 bekannt. Das Handstück umfasst einen elektrisch oder pneumatisch antreibbaren Schwingungserreger, an den eine Sonotrode anschließt. Die Sonotrode weist eine Aufnahme für einen Füllmassebehälter auf und überträgt die Schwingungen vom Schwingungserreger über den Füllmassebehälter auf die Füllmasse. Durch die Beaufschlagung der Füllmasse mit Schwingungen, insbesondere mit Ultraschallschwingungen, wird deren Viskosität verringert und somit das Einbringen der Füllmasse in enge Räume oder Kanäle, insbesondere in Zahnkavitäten oder Wurzelkanäle, erleichtert.

Zum Fördern der Füllmasse aus dem Füllmassebehälter ist eine Fördervorrichtung vorgesehen, die einen beweglichen, verschiebbaren Kolben umfasst. Gemäß der Patentanmeldung WO 2006/136398 ist dieser Kolben innerhalb der als hohler Schwingschaft ausgebildeten Sonotrode angeordnet. Der Nachteil dieses Aufbaus liegt darin, dass der Kolben bzw. andere Bauteile der Fördervorrichtung die Sonotrode berühren und somit die Übertragung der Schwingungen durch die Sonotrode störend beeinflussen und den Energieeintrag auf die Füllmasse verringern.

Der vorliegenden Erfindung liegt daher die Aufgabe zugrunde ein medizinisches, insbesondere dentales, Handstück zur Abgabe von Füllmasse auf menschliches oder tierisches Gewebe oder auf Prothesen für menschliches oder tierisches Gewebe zu schaffen, das diese Nachteile nicht aufweist und das eine verbesserte Schwingungsübertragung auf die Füllmasse aufweist.

Gemäß einem Ausführungsbeispiel umfasst das medizinische, insbesondere dentale, Handstück zur Abgabe von Füllmasse auf menschliches oder tierisches Gewebe oder auf Prothesen für menschliches oder tierisches Gewebe eine Anschlussvorrichtung für einen Behälter mit Füllmasse, eine Schwingeinheit zur Erzeugung und Übertragung von Schwingungen auf die Füllmasse und eine Fördervorrichtung zur Förderung der Füllmasse aus dem Behälter. Die Schwingeinheit weist einen Schwingungserreger und eine Sonotrode auf, wobei die Sonotrode und die Anschlussvorrichtung zum Fördern der Füllmasse aus dem Füllmassebehälter relativ zueinander verschiebbar sind, insbesondere linear auf einander zu und von einander weg verschiebbar sind. Bevorzugt ist die Sonotrode verschiebbar im Handstück angeordnet, insbesondere ist sie durch die Fördervorrichtung in Richtung der Anschlussvorrichtung für den Füllmassebehälter verschiebbar. Alternativ sind der Füllmassebehälter oder die Anschlussvorrichtung oder die Anschlussvorrichtung und die Sonotrode verschiebbar im oder zum Handstück angeordnet.

Erfindungsgemäß dient die Sonotrode somit sowohl der Übertragung der Schwingungen auf die Füllmasse als auch dem Ausbringen der Füllmasse aus dem Behälter, wodurch eine Schwingungsübertragung ohne störenden Einfluss durch andere Bauteile des Handstücks erzielt wird. Damit diese beiden Aufgaben zuverlässig von einem einzelnen Bauteil, i.e. der Sonotrode, ausgeführt werden können, ist es von besonderem Vorteil, dass die Sonotrode im Wesentlichen starr und / oder im Wesentlichen gerade ausgebildet ist, da dadurch eine besonders effektive Schwingungsübertragung mit geringen Verlusten oder Dämpfungseffekten und damit ein ausreichend großer Energieeintrag auf die Füllmasse, insbesondere auf hochviskose Füllmassen auf Kunstharzbasis, und eine kontinuierliche Förderung der Füllmasse aus dem Behälter gewährleistet sind. Die starre Ausbildung der Sonotrode bewirkt insbesondere bei Schwingungserregern, die eine räumliche, zum Beispiel radiale und axiale Schwingung erzeugen, eine merklich verbesserte Schwingungsübertragung.

Mit dem medizinischen, insbesondere dentalen, Handstück können verschiedene Arten von Füllmassen abgegeben werden, bei denen durch das Beaufschlagen mit Schall oder Ultraschall eine Viskositätsänderung erzielt wird, die das Einfüllen der Füllmasse in einen Hohlraum erleichtert, zum Beispiel Zemente oder Füllmassen auf Kunstharzbasis. Bevorzugt wird das Handstück zur Abgabe von dentalen Füllmassen auf Kunstharzbasis verwendet, die durch das Einwirken von Licht polymerisieren oder aushärten (so genannte Composite), insbesondere von hochviskosen, einen hohen Anteil an anorganischen Füllstoffen aufweisenden dentalen Füllmassen auf Kunstharzbasis.

Die Abgabe der Füllmassen erfolgt bevorzugt direkt auf oder in menschliches oder tierisches Gewebe um damit Hohlräume, Kavitäten, zum Beispiel durch Karies entstandene oder präparierte Kavitäten, oder Kanäle, zum Beispiel Wurzelkanäle, zu füllen. Alternativ werden die Füllmassen zum Befestigen von Prothesen, zum Beispiel dentalen Inlays, an menschlichem oder tierischem Gewebe verwendet, wobei hierbei die Füllmasse wiederum auf das Gewebe und oder auch auf die Prothese abgegeben wird.

Die Anschlussvorrichtung für den Füllmassebehälter ist als Hohlraum, Aufnahme oder Kupplungselement ausgebildet, in oder an die zumindest ein Teil des Behälters direkt anschließbar ist. Alternativ ist an die Anschlussvorrichtung ein Stütz- oder Trageelement für den Füllmassebehälter anschließbar. Die Anschlussvorrichtung ist als Teil des Handstücks, insbesondere als Teil der Außenhülse des Handstücks, ausgebildet.

Der Schwingungserreger der Schwingeinheit bzw. der Schallwandler als Teil des Schwingungserregers kann als pneumatisch oder als elektrisch betriebener Schwinger, insbesondere als Piezoschwinger oder als magnetostriktiver Schwinger, ausgebildet sein.

Gemäß einem Ausführungsbeispiel weisen die Anschlussvorrichtung für den Füllmassebehälter und die Sonotrode eine gemeinsame, gerade Mittelachse auf, so dass durch Verschieben der Sonotrode entlang der Mittelachse die Sonotrode in die Anschlussvorrichtung eindringen kann. Durch diesen Aufbau entlang der gemeinsamen Mittelachse wird der Energieeintrag auf die Füllmasse weiter verbessert, da die Schwingungsübertragung ausschließlich über geradlinig hintereinander angeordnete Bauteile erfolgt. Bevorzugt ist zusätzlich auch das Handstück oder, im Falle eines zum Beispiel pistolenförmig geformten Handstücks, zumindest jener Abschnitt des Handstücks, in dem die Anschlussvorrichtung und die Sonotrode angeordnet sind, im Wesentlichen gerade ausgebildet. Besonders bevorzugt fallen die Längsachse dieses Abschnitts oder des gesamten Handstücks und die Mittelachsen der Anschlussvorrichtung und der Sonotrode zusammen, so dass die Anschlussvorrichtung und die Sonotrode zentrisch in diesem Abschnitt oder im Handstück angeordnet sind. Um dem Anwender die Abgabe der Füllmasse zu erleichtern, ist insbesondere bei diesem Ausführungsbeispiel der Füllmassebehälter gebogen oder gewinkelt ausgebildet, wobei zumindest ein Teil des Füllmassebehälters gewinkelt zur gemeinsamen, geraden Mittelachse der Anschlussvorrichtung und der Sonotrode oder zur Längsachse des Handstücks oder des oben genannten Handstückabschnitts angeordnet ist.

Durch das Vorsehen einer einzigen Lagerstelle für die Schwingeinheit wird die Schwingungsübertragung zusätzlich optimiert. Bevorzugt besteht die Schwingeinheit aus einem elektrisch oder pneumatisch betreibbaren Schallwandler, einer Gegenmasse und der Sonotrode, wobei die einzige Lagerstelle im Bereich des Schallwandlers vorgesehen ist und eine den Schallwandler umgebende Vergussmasse umfasst. Die Vergussmasse kann zum Beispiel ein Kunstharz, insbesondere ein Silikonharz, aufweisen. Die Verwendung von Vergussmasse als Lagermaterial hat den zusätzlichen Vorteil, dass die elektrischen Komponenten des Handstücks vor in das Handstück eindringenden Verschmutzungen und Feuchtigkeit geschützt sind.

Bevorzugt ist die Sonotrode fest mit den übrigen Bauteilen der Schwingeinheit verbunden, so dass zu Förderung der Füllmasse aus ihrem Behältnis die gesamte Schwingeinheit beweglich ausgebildet ist. Um die Schwingeinheit im Inneren des Handstücks mit möglichst geringem Kraftaufwand verschieben zu können, ist die Schwingeinheit in einer Gleithülse aufgenommen, die gleitend im Handstück angeordnet ist, wobei zumindest jener Teil der Sonotrode, der an die Anschlussvorrichtung für den Füllmassebehälter anschließt oder der in die Anschlussvorrichtung eindringt, aus der Gleithülse ragt.

Gemäß einem weiteren Ausführungsbeispiel ist im Handstück eine Verdrehsicherung vorgesehen, die ein Verdrehen der Schwingeinheit oder der Sonotrode relativ zum Handstück unterbindet. Die Verdrehsicherung dient zum geradlinigen Führen der Sonotrode in Richtung der Anschlussvorrichtung oder von dieser weg, ohne dass es dabei zu Verdrehungen kommt, durch die zum Beispiel die elektrischen oder pneumatischen Leitungen zum Antrieb des Schwingungserregers verdreht, unterbrochen, gebrochen oder beschädigt werden. Die Verdrehsicherung verhindert auch ein Verdrehen der Schwingeinheit oder der Sonotrode wenn während der Benutzung ein Drehmoment auf die Sonotrode einwirkt, zum Beispiel während des Einsetzens eines Füllmassebehälters in die Anschlussvorrichtung oder beim Lösen des Vorderendes der Sonotrode vom Handstück.

Da die Sonotrode den unsterilen Füllmassebehälter kontaktiert oder eventuell mit Füllmasse oder Gewebepartikeln oder Körperflüssigkeiten des Patienten in Kontakt kommt, ist es vorteilhaft, die Sonotrode derart auszubilden, dass sie in einfacher Weise vom Anwender gereinigt werden kann. Dies wird bevorzugt dadurch erreicht, dass die Sonotrode zweiteilig aufgebaut ist, wobei jener Teil der Sonotrode, der weiter vom Schwingungserreger entfernt ist, vom restlichen Teil der Sonotrode lösbar und auf einfache Weise aus dem Handstück entfernbar ist. Bevorzugt wird dieser Sonotrodenteil durch die Anschlussvorrichtung aus dem Handstück genommen und kann anschließend problemlos gereinigt oder sterilisiert werden.

Gemäß einem auch eigenständig erfinderischer Aspekt ist die Schwingeinheit des medizinischen, insbesondere dentalen, Handstücks zur Abgabe von Füllmasse auf menschliches oder tierisches Gewebe oder auf Prothesen für menschliches oder tierisches Gewebe in einem automatisierten Betriebsmodus zur gepulsten Leistungsabgabe auf die Füllmasse betreibbar ist. Dieser Ausführungsform liegt die Beobachtung zu Grunde, dass es durch die Beaufschlagung der Füllmasse mit Schwingungen, insbesondere mit Ultraschallschwingungen, zu einer starken Erwärmung der Füllmasse kommt, zum Beispiel durch Reibung der Sonotrode am Füllmassebehälter, durch Reibung der Füllmasse am Behältergehäuse und durch Reibung von Füllmassepartikeln aneinander. Die Erwärmung kann dabei so stark sein, dass beim Aufbringen der Füllmasse auf lebendes Gewebe der Patient ein Schmerzgefühl empfindet. Zusätzlich erhöht sich durch die Erwärmung der Füllmasse die Gefahr der Schwindung beim Aushärten der Füllmasse.

Durch den Betrieb des Handstücks in dem automatisierten Betriebsmodus zur gepulsten Leistungsabgabe auf die Füllmasse werden diese Nachteile überwunden und insbesondere die Erwärmung der Füllmasse verringert, ohne dass dabei die Förderung der viskosen Füllmasse aus dem Füllmassebehälter oder der Ablauf des Füllvorgangs beeinträchtigt werden. Die Pulsrate des automatisierten Betriebsmodus zur gepulsten Leistungsabgabe soll dazu zumindest 10 Hz, bevorzugt mehr als 50 Hz, besonders bevorzugt zwischen 90 - 100 Hz, betragen.

Während des Betriebs des Handstücks in dem automatisierten Betriebsmodus zur gepulsten Leistungsabgabe wird die Füllmasse mit zumindest zwei unterschiedlichen Schwingleistungen beaufschlagt oder schaltet die Schwingeinheit 3 alternierend zwischen zumindest zwei unterschiedlichen, abgegebenen Schwingleistungen. Gemäß einem Ausführungsbeispiel kann eine der beiden Schwingleistungen auch 0 Watt betragen, so dass also kein Energieeintrag auf die Füllmasse stattfindet. Alternativ sind beide Schwingleistungen während des automatisierten Betriebs zur gepulsten Leistungsabgabe größer 0 Watt, zum Beispiel kann die Leistungsabgabe alternierend in etwa 5 Watt und in etwa 0,5 Watt oder in etwa 10 Watt und in etwa 1 Watt betragen.

Es wurde auch festgestellt, dass durch den automatisierten, gepulsten Betrieb des Handstücks bzw. die gepulste Leistungsabgabe das Modellieren der bereits auf die Präparationsstelle abgegebenen Füllmasse möglich oder verbessert wird, da durch den Pulsbetrieb die Düse oder das Vorderende des Füllmassebehälters, durch die das Füllmaterial abgegeben wird und die gleichzeitig auch zum Modellieren verwendet werden, oder ein eigenes, mit dem Handstück verbindbares Modellierwerkzeug über die Sonotrode stärker in Schwingung versetzt werden bzw. größere Schwingungsamplituden ausführen als bei einer kontinuierlichen Schwingungsübertragung bzw. Leistungsabgabe.

Gemäß einem Ausführungsbeispiel ist die Schwingeinheit zur gepulsten Leistungsabgabe abwechselnd zwischen einem ersten Zustand, in dem sie Schwingungen abgibt, und einem zweiten Zustand, in dem sie keine Schwingungen abgibt, schaltbar. Die Schaltung zwischen den beiden Zuständen erfolgt bevorzugt durch einen Schaltkreis einer Steuer- und / oder Regelvorrichtung mit einem Mikrokontroller. Besonders bevorzugt schaltet die Steuer- und / oder Regelvorrichtung die Schwingeinheit alternierend ein und aus, zum Beispiel durch die Abgabe von gepulsten Steuer- oder Antriebssignalen. Insbesondere schaltet sie die Zufuhr des Antriebsmediums für den Schwingungserreger, also die Stromversorgung für einen elektrisch betreibbaren Schwingungserreger oder die Druckgaszufuhr für einen pneumatisch betreibbaren Schwingungserreger alternierend ein und aus. Die Steuer- und / oder Regelvorrichtung ist entweder vollständig im Handstück oder in einem mit dem Handstück über ein Kabel verbundenen Basisgerät oder teilweise im Handstück und im Basisgerät angeordnet.

Alternativ ist die Schwingeinheit, insbesondere der Schwingungserreger, zur gepulsten Leistungsabgabe abwechselnd mit zwei unterschiedlichen Frequenzen betreibbar. Eine der beiden Frequenzen ist dabei so gewählt, dass sie gleich einer Resonanzfrequenz der Sonotrode ist, so dass die Sonotrode in Schwingung versetzt wird und somit eine erste, hohe Schwingleistung auf die Füllmasse und den Füllmassebehälter überträgt. Die andere der beiden Frequenzen entspricht keiner Resonanzfrequenz der Sonotrode, so dass diese keine Schwingungen überträgt oder zumindest nur geringfügig in Schwingung versetzt wird, wodurch keine oder nur eine geringe Schwingleistung auf die Füllmasse und den Füllmassebehälter übertragen wird.

Der Wechsel zwischen den zumindest zwei unterschiedlichen Frequenzen wird wiederum durch einen Steuer- oder Schaltkreis einer Steuer- und / oder Regelvorrichtung mit einem Mikrokontroller bewirkt, insbesondere durch die Abgabe von unterschiedlichen Steuer- oder Antriebssignalen an den Schwingungserreger, zum Beispiel durch die Variation der an den Piezoschwinger oder magnetostriktiven Schwinger angelegten Frequenz der Steuerspannung.

Gemäß einem bevorzugten Ausführungsbeispiel ist die Schwingeinheit in einem zweiphasigen Antriebsmodus betreibbar, wobei die erste Antriebsphase eine im Wesentlichen konstante Leistungsabgabe auf die Füllmasse und die zweite, darauf folgende Phase den automatisierten Modus zur gepulsten Leistungsabgabe umfasst. Dadurch wird erreicht, dass beim Start einer Behandlung oder nach einer Behandlungspause ohne Verzögerung eine erste Portion Füllmasse abgegeben wird. Die erste, kontinuierliche Antriebsphase dauert in etwa zwischen zwei und 15 Sekunden, bevorzugt zwischen vier und zehn Sekunden, besonders bevorzugt in etwa fünf Sekunden. Der bevorzugt automatisierte Ablauf des zweiphasigen Antriebsmodus, insbesondere die Dauer der ersten Antriebsphase und die gepulste Leistungsabgabe, wird wiederum von der Steuer- und / oder Regelvorrichtung überwacht.

Selbstverständlich ist die gepulste Leistungsabgabe auf die Füllmasse auch über andere Maßnahmen realisierbar, zum Beispiel kann die Sonotrode zweiteilig ausgebildet sein, wobei die beiden Teile alternierend miteinander gekuppelt und voneinander entkuppelt werden, zum Beispiel mittels einer Magnetkupplung, um die Schallübertragung auf die Füllmasse zu bewerkstelligen oder zu unterbrechen. Dem entsprechend können auch die Sonotrode und der Schwingungserreger miteinander kuppelbar und voneinander entkuppelbar ausgebildet sein.

Gemäß einem anderen Ausführungsbeispiel umfasst das Handstück oder das Basisgerät ein Stellelement zur Auswahl der Pulsdauer des automatisierten Betriebsmodus zur gepulsten Leistungsabgabe oder zur Auswahl der Pulsrate des automatisierten Betriebsmodus zur gepulsten Leistungsabgabe oder zur Festlegung der Dauer der ersten Antriebsphase oder zur Auswahl der auf die Füllmasse übertragbaren Leistung.

Ein Verfahren zur Abgabe von Füllmasse, insbesondere von dentaler Füllmasse auf Kunstharzbasis, auf menschliches oder tierisches Gewebe mit einem im Vorhergehenden beschriebenen Handstück umfasst den Schritt, dass die Sonotrode durch die Fördervorrichtung in Richtung der Anschlussvorrichtung für den Füllmassebehälter verschoben wird. Die Sonotrode drückt dadurch Füllmasse aus dem Füllmassebehälter. Das Verschieben der Sonotrode oder der gesamten, mit der Sonotrode verbundenen Schwingeinheit und damit das Austreiben der Füllmasse aus dem Behälter kann entweder gleichzeitig mit der Schwingungsübertragung durch die Sonotrode erfolgen oder aber auch ohne in Schwingung versetzen der Sonotrode.

Ein anderes Verfahren zur Abgabe von Füllmasse, insbesondere von dentaler Füllmasse auf Kunstharzbasis, auf ein menschliches oder tierisches Gewebe mit einem im Vorhergehenden beschriebenen Handstück umfasst den Schritt, dass die Schwingeinheit in einem automatisierten Betriebsmodus betrieben wird, bei dem eine gepulste Leistungsabgabe auf die Füllmasse erfolgt. Bevorzugt werden dabei von der Schwingeinheit abwechselnd Schwingungen auf die Füllmasse abgegeben und nicht abgegeben.

Ein Verfahren zur Modellierung von auf eine Präparationsstelle abgegebener Füllmasse mit einem im Vorhergehenden beschriebenen Handstück umfasst den Schritt, dass die Schwingeinheit in einem automatisierten Betriebsmodus betrieben wird, bei dem eine gepulste Leistungsabgabe auf die Füllmasse erfolgt. Die gepulste Leistung wird zum Beispiel über den Behälter der Füllmasse, insbesondere über dessen Abgabeende für die Füllmasse, das oftmals als Düse ausgebildet ist, oder über die Anschlussvorrichtung für den Füllmassebehälter oder über ein darin befestigtes Stütz- oder Trageelement für den Füllmassebehälter oder über ein Modellierwerkzeug auf die Füllmasse abgegeben. Bevorzugt werden dabei von der Schwingeinheit abwechselnd Schwingungen abgegeben und nicht abgegeben, die auf die Füllmasse, die sich auf der Präparationsstelle befindet, übertragen werden, so dass sich deren Viskosität verringert und die Formbarkeit der Füllmasse verbessert. Das Modellierwerkzeug ist zum Beispiel spatel- oder stabförmig ausgebildet und lösbar in die Anschlussvorrichtung einsetzbar, so dass darauf Schwingungen übertragen werden.

Die Erfindung wird nachfolgend anhand eines bevorzugten Ausführungsbeispiels und Bezug nehmend auf die beigefügten Zeichnungen erläutert:
Figur 1 zeigt eine Schnittdarstellung eines ersten Ausführungsbeispiels eines medizinischen, insbesondere dentalen, Handstücks zur Abgabe von Füllmasse mit getrennten Handstückteilen.
Figur 2 zeigt eine weitere Schnittdarstellung des Handstücks aus Figur 1 entlang einer zweiten Schnittebene mit zusammengefügten Handstückteilen.
Figur 3 zeigt eine Schnittdarstellung eines zweiten Ausführungsbeispiels eines Handstücks zur Abgabe von Füllmasse mit einer alternativ ausgebildeten Fördervorrichtung.

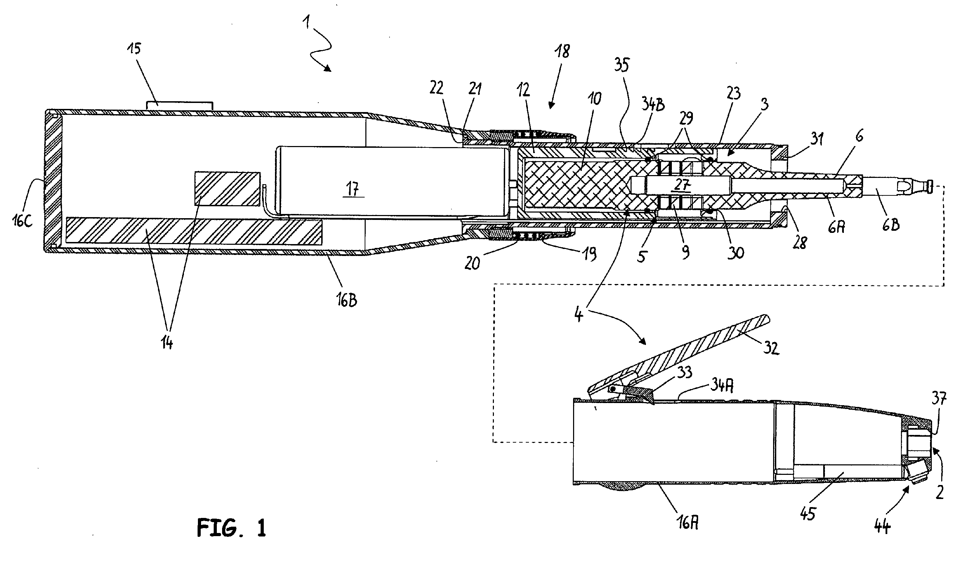

Die in den Figuren 1 - 3 dargestellten bevorzugten Ausführungsformen eines medizinischen, insbesondere dentalen, Handstücks 1, 1A zur Abgabe von Füllmasse auf menschliches oder tierisches Gewebe oder auf Prothesen für menschliches oder tierisches Gewebe ist als kabelloses, batteriebetriebenes Handgerät oder Handstück ausgebildet. Es ist jedoch selbstverständlich, dass das Handstück auch mittels einer externen Stromquelle betreibbar ist, wobei es dazu eine elektrische Leitung zur Verbindung mit der externen Stromquelle aufweist. In diesem Fall ist es auch möglich, dass das Handstück zur Abgabe von Füllmasse eine Basisstation oder ein Basisgerät aufweist, mit der es über ein Versorgungskabel verbunden ist, das bevorzugt zumindest die elektrische Leitung und gegebenenfalls auch weitere Medienleitungen umfasst. Auf dem Basisgerät sind des Weiteren bevorzugt Steuer- oder Stellelemente zur Einstellung von Betriebsparametern oder zur Auswahl von Betriebsprogrammen oder eine Anzeige für Betriebsparameter vorgesehen.

Das Handstück 1, 1A weist eine Außenhülse 16 auf, die einteilig oder, wie in den Figuren 1 - 3 dargestellt, mehrteilig aufgebaut ist. Die Außenhülse 16 bzw. das gesamte Handstück 1, 1A sind dabei in zwei Teil trennbar, wobei der vordere oder erste Handstückteil den Außenhülsenteil 16A umfasst, insbesondere mit der Anschlussvorrichtung 2 und einem Teil der Fördervorrichtung 4. Der Außenhülsenteil 16A kommt während der Behandlung mit dem Patienten in Berührung. Durch die Trennbarkeit kann der Außenhülsenteil 16A vom restlichen Handstück 1, 1A gelöst und gereinigt, desinfiziert oder sterilisiert werden, um die Übertragung von Keimen zwischen Patienten zu verhindern. Ein lösbar mit dem Außenhülsenteil 16B verbundenen Deckel 16C schließt das Handstück 1, 1 A an einem Ende ab.

Der hintere oder zweite Handstückteil umfasst den Außenhülsenteil 16B, bevorzugt mit der Leistungsversorgung für das Handstück 1, 1A, zum Beispiel mit einer Batterie oder einem Akkumulator 17, einer mit der Leistungsversorgung verbundenen Steuer- und / oder Regelvorrichtung 14 und zumindest Teilen der Schwingeinheit 3, insbesondere mit dem Schwingungserreger 5. Die Leistungsversorgung und zumindest Teile der Schwingeinheit 3 sind in einer Schutzhülse 23 aufgenommen. Zur Verbindung der Schutzhülse 23 mit dem Außenhülsenteil 16B sind diese zumindest in einem Abschnitt kontaktierend ineinander geschoben. Durch eine Schulter 21 und einen Vorsprung 22 an jeweils einem der beiden Hülsen 16B, 23 stützen sich die beiden Hülsen 16B, 23 aneinander ab, wobei sie zusätzlich oder alternativ miteinander verschraubt sind.

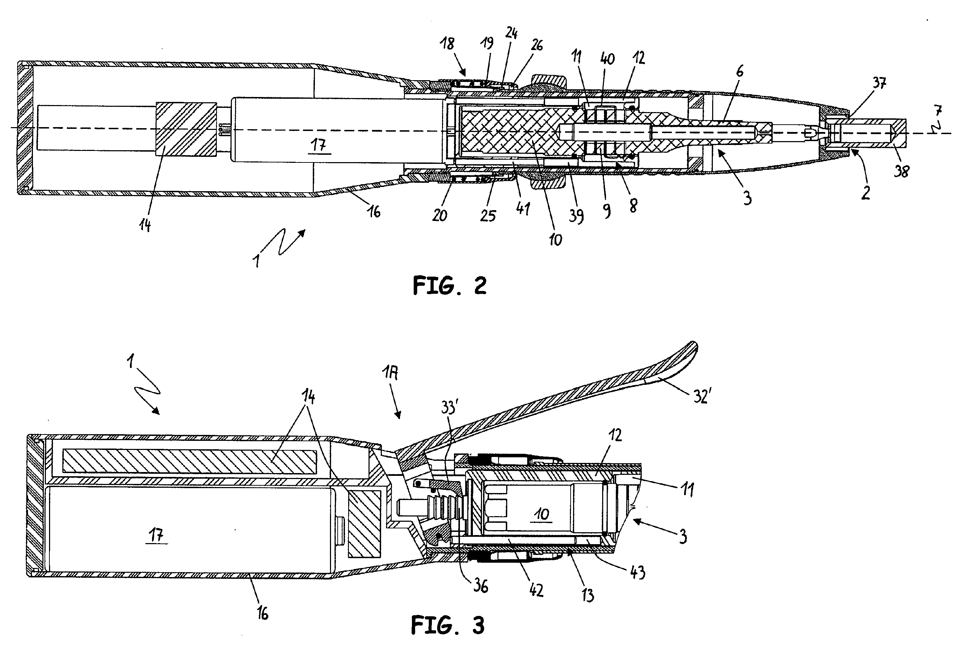

Die Verriegelung der beiden Handstück- oder Außenhülsenteil 16A, 16B erfolgt über eine lösbare Verriegelungsseinrichtung 18. Die Verriegelungsseinrichtung 18 umfasst eine beweglich, zum Beispiel verschiebbar, am Handstück 1, 1A angebrachte Verriegelungshülse 19, die durch ein Federelement 20 in ihrer Verriegelungsposition vorgespannt ist. Zwischen der Verriegelungshülse 19 und der Schutzhülse 23 ist zumindest eine federnd ausgebildete Spannlasche 24 vorgesehen, die an ihrem freien, der Anschlussvorrichtung 2 zugewandten Ende eine radial nach innen, in Richtung der Mittelachse 7 weisende Rastnase aufweist. Im verriegelten Zustand, wie er in Figur 2 dargestellt ist, drückt die Verriegelungshülse 19 mit ihrer Innenseite die Spannlasche 24 radial nach Innen (in Richtung der Mittelachse 7), so dass die Rastnase ein an der Außenseite des Außenhülsenteils 16A angeordnetes Gegenelement 25, zum Beispiel eine Vorsprung, hintergreift, wodurch ein axiales Lösen der beiden Außenhülsenteile 16A, 16B verhindert wird. Der Außenhülsenteil 16A ist in diesem verriegelten Zustand auf die Schutzhülse 23 aufgeschoben und zusätzlich zwischen dieser und der Verriegelungshülse 19 bzw. der Spannlasche 24 geklemmt.

Zum Lösen der beiden Handstück- oder Außenhülsenteil 16A, 16B wird die Verriegelungshülse 19 entgegen der Kraft des Federelements 20 in Richtung des Akkumulators 17 gezogen, wodurch die Spannlasche 24 und die Rastnase, die relativ zur Verriegelungshülse 19 stationär sind, radial nach außen, von der Mittelachse 7 weg, in eine Ringnut 26 ausweichen können und das Gegenelement 25 frei geben, so dass der Außenhülsenteil 16A aus der Verriegelungshülse 19 heraus und von der Schutzhülse 23 herunter gezogen werden kann.

Die Schwingeinheit 3 des Handstücks 1 umfasst einen Schwingungserreger 5 mit einem Schallwandler 9 und einer metallischen Gegenmasse 10 und einen Schwingungsüberträger, im Folgenden als Sonotrode 6 bezeichnet. Der Schallwandler 9, die Gegenmasse 10 und die Sonotrode 6 sind an einem gemeinsamen Trägerelement, zum Beispiel einem Stift 27, angeordnet. Der Stift 27 weist an seinen beiden Enden jeweils eine Verbindungsvorrichtung auf, bevorzugt ein Gewinde, an dem die Sonotrode 6 und die Gegenmasse 10 befestigt sind. Zwischen den beiden Verbindungsvorrichtungen weist der Stift eine glatte Oberfläche auf, auf der eine Zwischenschicht oder eine Isolationshülse und darüber der Schwingungserreger 5 angeordnet sind.

Der Schwingungserreger 5 umfasst mehrere, zum Beispiel vier oder fünf, Piezoelemente, die zwischen der Gegenmasse 10 und der Sonotrode 6 verspannt sind. Werden die Piezoelemente unter elektrische Spannung gesetzt, so beginnen sie in bekannter Weise zu schwingen, insbesondere im Ultraschallbereich, und übertragen ihre Schwingungen auf die Sonotrode 6.

Die Sonotrode 6 umfasst einen länglichen, hohlen Schaft, der im Wesentlichen starr und im Wesentlichen oder vollständig gerade ausgebildet ist. Die Sonotrode ist bevorzugt aus Metall, insbesondere aus Titan, gefertigt. Sie ragt durch eine Öffnung 28 in der Schutzhülse 23 bis in den Außenhülsenteil 16A oder über diesen hinaus. Die Sonotrode 6 besteht aus zwei Teilen 6A, 6B, die lösbar miteinander verbunden sind, zum Beispiel durch ein Gewinde oder durch eine Bajonettverbindung. Der Teil 6B der Sonotrode 6, der weiter vom Schwingungserreger 5 entfernt ist, kann somit in vorteilhafter Weise vom zweiten Handstückteil 16B und dem damit verbundenen Teil 6A der Sonotrode 6 gelöst und gereinigt werden.

Die Schwingeinheit 3 ist an einer einzigen Lagerstelle 8 im Handstück 1 gelagert, die sich im Bereich des Schallwandlers 9 befindet. Die Lagerung umfasst ein Vergussmaterial 11, zum Beispiel Silikonharz, mit dem der Schallwandler 9 umgossen wird. In vorteilhafter Weise dient das Vergussmaterial 11 auch zum Schutz und zur elektrischen Isolierung des Schwingungserregers 5. Zwei O-Ringe 29, die auf der Gegenmasse 10 und auf der Sonotrode 6, jeweils nahe dem Schallwandler 9, angeordnet sind, zentrieren die Schwingeinheit 3 im Handstück 1 und dienen gleichzeitig auch als Dichtelemente beim Eingießen der Vergussmasse 11.

Die Schwingeinheit 3 ist in einer Gleithülse 12 aufgenommen und durch die Lagerstelle 8 darin gelagert. Die Gleithülse 12 besteht bevorzugt aus Kunststoff und weist an einer Seite eine Öffnung 30 auf, durch die ein Teil der Schwingeinheit 3, insbesondere zumindest ein Teil der Sonotrode 6, ragt. Die Sonotrode 6 und die Gegenmasse 10 sind durch einen Spalt von der Innenwand der Gleithülse 12 getrennt und berühren somit zwecks ungestörter Schwingung die Gleithülse 12 nicht. Die Gleithülse 12 und die darin aufgenommene Schwingeinheit 3 sind verschiebbar zur Schutzhülse 23 bzw. zur Außenhülse 16 ausgebildet. Die Gleithülse 12 gleitet entlang der Innenwand der Schutzhülse 23, wobei ihre Bewegung durch einen Anschlag begrenzt wird, welcher zum Beispiel durch eine Stirnwand 31 der Schutzhülse 23 gebildet ist.

Die Fördervorrichtung 4 des Handstücks 1 umfasst unter anderem einen an der Außenseite des Handstücks 1 befestigten, für einen Anwender manuell betätigbaren, dreh- oder schwenkbaren Hebel 32. Der Hebel 32 ist mit einer Mitnehmervorrichtung verbunden, die eine Klinke 33 umfasst. Die Klinke 33 ragt mit ihrem keilförmigen Ende durch eine Öffnung 34A der Außenhülse 16 und durch eine Öffnung 34B der Schutzhülse 23 in den Innenraum der Schutzhülse 23 und greift in eine an der Außenseite der Gleithülse 12 angeordnete Zahnreihe 35. Die Klinke 33 ist durch eine nicht dargestellte Feder in Richtung der Zahnreihe 35 vorgespannt. Durch Schwenken des Hebels 32 abwechselnd in Richtung der Öffnungen 34A, 34B und in die Gegenrichtung werden die Gleithülse 12 und die Sonotrode 6 in Richtung der Anschlussvorrichtung 2 verschoben. Dies geschieht, indem das keilförmige Vorderende der Klinke 33 zwischen zwei Zähne der Zahnreihe 35 eingreift und diese verschiebt, wenn der Hebel 32 in Richtung der Öffnungen 34A, 34B gedreht wird. Wird der Hebel 32 in die Gegenrichtung geschwenkt, so löst sich das keilförmige Vorderende der Klinke 33 von den beiden Zähnen der Zahnreihe 35, um bei der nächsten Bewegung des Hebels 32 in Richtung der Öffnungen 34A, 34B wieder in die Zahnreihe 35 einzugreifen.

Gemäß einem alternativen Ausführungsbeispiel ist eine motorisch antreibbare Fördervorrichtung vorgesehen, bei der anstelle des Hebels 32 ein elektrischer Antriebsmotor oder ein pneumtischer Antrieb, der insbesondere einen durch ein Druckgas verschiebbaren Kolben aufweist, die Sonotrode 6 verschiebt.

Die Fördervorrichtung 4' gemäß Figur 3 umfasst ebenfalls einen manuell bedienbaren, schwenk- oder drehbaren Hebel 32' sowie eine Zahnstange 36, die mit der Gleithülse 12 verbunden ist. Am Hebel 32' ist wiederum eine Klinke 33' mit einem keilförmigen Vorderende vorgesehen. Die Klinke 33' ist durch eine Feder in Richtung der Zahnstange 36 vorgespannt. Durch Schwenken des Hebels 32' abwechselnd zum Handstück 1A und in die Gegenrichtung werden die Zahnstange 36, die Gleithülse 12 und die Sonotrode 6 in Richtung der Anschlussvorrichtung 2 verschoben. Dies geschieht wie oben bereits für die Zahnreihe 35 an der Gleithülse 12 beschrieben, durch abwechselndes Eingreifen und Lösen der Klinke 33' in die Zähne der Zahnstange 36. Im Gegensatz zur Fördervorrichtung 4 gemäß Figur 1 sind bei der Fördervorrichtung 4' die Drehachse, um die sich der Hebel 32' dreht, sowie die gesamte Mitnehmervorrichtung einschließlich der Klinke 33' im Inneren des Handstücks 1A angeordnet.

Am distalen Ende des Handstücks 1 ist eine Anschlussvorrichtung 2 für einen Behälter mit der Füllmasse vorgesehen. Die Anschlussvorrichtung 2 schließt an die Sonotrode 6 an oder ist als Teil der Sonotrode 6 ausgebildet und überträgt somit Schwingungen auf die Füllmasse. Die Anschlussvorrichtung 2 gemäß Figur 1 umfasst eine Aufnahme 37, die Teil der Außenhülse 16 ist. In die Aufnahme 37 ist zumindest ein Teil des Füllmassebehälters einfügbar und über eine Befestigungsvorrichtung, zum Beispiel ein Gewinde oder eine Bajonettkupplung, darin befestigbar. Ein Stütz- oder Trageelement 38 für den Füllmassebehälter, das an der Aufnahme 37 befestigt ist, stützt und lagert den Füllmassebehälter.

Wie bereits beschrieben ist die Schwingeinheit 3, insbesondere die Sonotrode 6, verschiebbar in Bezug auf das restliche Handstück 1 und somit auch auf die Anschlussvorrichtung 2 und einen darin aufgenommenen Füllmassebehälter ausgebildet. Wie insbesondere aus Figur 2 erkennbar ist, wird durch Betätigen des Hebels 32, 32' die Sonotrode 6 in Richtung der Anschlussvorrichtung 2 verschoben oder dringt in diese und in den Füllmassebehälter ein, wodurch Füllmasse aus dem Füllmassebehälter ausgetrieben und auf die Präparationsstelle abgegeben wird. Die Schwingeinheit 3 und insbesondere die Sonotrode 6 dienen damit nicht nur der Übertragung von Schwingungen auf die Füllmasse zur Verminderung der Viskosität der Füllmasse, sondern sie sind damit gleichzeitig auch Teil der Fördervorrichtung 4, 4' zum Austreiben der Füllmasse aus dem Füllmassebehälter.

Die Anschlussvorrichtung 2 und die Sonotrode 6 weisen eine gemeinsame, gerade Mittelachse 7 auf, entlang der die Sonotrode 6 verschiebbar ist, um bevorzugt in die Anschlussvorrichtung 2 einzudringen. Diese Mittelachse 7 ist bevorzugt auch die gerade Mittelachse des Handstücks 1 (siehe Figur 2), so dass die Sonotrode 6 und die Anschlussvorrichtung zentrisch am Handstück 1 angeordnet sind.

Die Energieversorgung der Schwingeinheit 3 zum Antrieb des Schallwandlers 9 erfolgt durch eine externe Energiequelle oder durch eine im Handstück 1, 1A vorgesehene Energiequelle, zum Beispiel einen Akkumulator 17. Als Energiequelle dient im Fall eines pneumatischen Schallwandlers eine Druckgasquelle, im Fall eines elektrisch betriebenen Schallwandlers eine Stromquelle. Unabhängig von der Art der Energiequelle muss die Energieversorgung des Schallwandlers 9 derart ausgebildet sein, dass auch während des Verschiebens der Schwingeinheit 3 zum Fördern der Füllmasse aus dem Füllmassebehälter oder unabhängig von der Position, die die Schwingeinheit 3 im Handstück 1, 1A einnimmt, eine zuverlässige Energieversorgung der Schwingeinheit 3, insbesondere des Schallwandlers 9 garantiert ist. Dies wird dadurch erreicht, dass zumindest ein Teil der Energieversorgung mit der Schwingeinheit 3, insbesondere dem Schwingungserreger 5, verbunden ist und mit dieser relativ zum übrigen Handstück 1, 1A oder zur Außenhülse 16 beweglich ist.

Bei einem pneumatischen Schallwandler umfasst die Energieversorgungseinheit zum Beispiel einen Schlauch, der das Druckgas zum Schallwandler leitet, wobei ein Ende des Schlauchs mit dem Schallwandler verbunden ist und der Verschiebungsbewegung des Schallwandlers oder der gesamten Schwingeinheit folgt. Zum Längenausgleich der vom Schallwandler zurückgelegten Wegstrecke während des Verschiebens ist der Schlauch flexibel ausgebildet: So kann der Schlauch zum Beispiel spiralförmig gewunden sein oder er besteht aus einem dehnbaren Material oder er umfasst zwei teleskopartig miteinander verbundene Schlauchteile, die ineinander stecken und relativ zueinander verschiebbar sind.

Bei einem elektrisch betriebenen Schallwandler umfasst die Energieversorgungseinheit elektrische Kontakte oder Leitungen, die mit dem Schallwandler verbunden sind und der Verschiebungsbewegung des Schallwandlers oder der gesamten Schwingeinheit folgen. Die elektrischen Kontakte oder Leitungen umfassen zum Beispiel spiralförmig gewundene Leitungen, Feder-, Schleif-, Gleitkontakte oder zweiteilig aufgebaute Kontakte, die ineinander verschiebbar sind. Gemäß Figur 2 sind zwei hülsenförmige, elektrisch leitende, metallische Kontakte 39 vorgesehen, die mit der Gleithülse 12 verbunden sind und mit dieser und der Schwingeinheit 3 relativ zum übrigen Handstück 1, 1A bewegt werden. Insbesondere sind die Kontakte 39 in die Wand der Gleithülse 12 eingefügt. Die hülsenförmigen Kontakte 39 sind über ebenfalls verschiebbare Drähte oder Leitungen 40 mit den scheibenförmigen Piezoelementen des Schallwandlers 9 verbunden. In den hülsenförmigen Kontakten 39 sind nicht dargestellte Spiralfedern sowie elektrisch leitende Kontaktstifte 41 aufgenommen. Die Kontaktstifte 41 sind mit der Energiequelle, zum Beispiel dem Akkumulator 17, verbunden und gleitend in den hülsenförmigen Kontakten 39 angeordnet, wodurch eine zuverlässige Stromversorgung des Schallwandlers 9 unabhängig von dessen Verschiebeposition über die Kontaktstifte 41, die hülsenförmigen Kontakte 39 mit den Spiralfedern und die Drähte 40 gewährleistet ist.

Gemäß einem anderen Ausführungsbeispiel ist es auch denkbar, den Akkumulator 17 verschiebbar im Handstück 1, 1A anzuordnen, so dass auch der Akkumulator 17 der Verschiebungsbewegung der Schwingeinheit folgt. Dazu kann zum Beispiel an der Gleithülse 12 eine Aufnahme für den Akkumulator 17 vorgesehen sein.

Im Handstück 1A der Figur 3 ist eine Verdrehsicherung 13 zu erkennen, die ein Verdrehen der Schwingeinheit 3 oder der Sonotrode 6 relativ zum Handstück 1 A unterbindet. Die Verdrehsicherung 13 dient insbesondere zum geradlinigen Führen der Sonotrode 6 in Richtung der Anschlussvorrichtung 2 oder von dieser weg, ohne dass es dabei zu Verdrehungen kommt. Die Verdrehsicherung 13 umfasst ein relativ zum Handstück 1A drehfest angeordnetes Sicherungselement 42, zum Beispiel einen Stift oder eine Kugel, das in eine Aufnahme, Nut oder Bohrung 43 der Gleithülse 12 eingreift und somit eine Drehbewegung der Schwingeinheit 3 und der Gleithülse 12 um ihre eigenen Achsen verhindert.

Gemäß einem bevorzugten Ausführungsbeispiel ist das Handstück 1 zur Abgabe von Füllmasse gemäß Figur 1 zusätzlich mit einer Beleuchtungsvorrichtung 44 ausgestattet, über die Strahlung mit einer Wellenlänge und Strahlungsleistung zum Aushärten von Füllmaterial bereitstellbar ist. Die Beleuchtungsvorrichtung 44 weist bevorzugt eine oder mehrere Leuchtdioden auf, die in einem hermetisch gekapseltem Beleuchtungsmodul angeordnet sind, um wiederholtem Sterilisieren zu widerstehen. Die Beleuchtungsvorrichtung 44 ist am distalen Ende des Handstücks 1, bevorzugt in der Nähe der Anschlussvorrichtung 2 angeordnet, so dass sie ihre Strahlung direkt, d.h. ohne Verwendung eines separaten Lichtleiters, auf das Füllmaterial emittieren kann.

Die Beleuchtungsvorrichtung 44 ist über Kontakte und Leitungen 45 elektrisch mit einer Energiequelle, zum Beispiel Akkumulator 17, verbunden. Sie ist auch mit der Steuer- und / oder Regelvorrichtung 14 verbunden, die die Stromversorgung für die Leuchtdioden überwacht bzw. aufbereitet und die Betriebsparameter der Beleuchtungsvorrichtung 44 überwacht, verändert oder vorgibt. Insbesondere umfasst die Steuer- und / oder Regelvorrichtung 14 eine Schalteinheit, die derart ausgebildet ist, dass wahlweise von der Schwingeinheit 3 Schwingungen auf die Füllmasse im Füllmassebehälter abgegeben werden oder die Beleuchtungsvorrichtung 44 Strahlung in Richtung der Präparationsstelle emittiert.

Die Steuer- und / oder Regelvorrichtung 14 ist auch mit der Schwingeinheit 3 verbunden, um deren Betrieb zu steuern oder zu regeln, so wie dies ausführlich schon weiter oben beschrieben wurde. Die Steuer- und / oder Regelvorrichtung 14 betreibt die Schwingeinheit insbesondere in einem automatisierten Betriebsmodus zur gepulsten Leistungsabgabe auf die Füllmasse, während dem die Füllmasse mit zumindest zwei unterschiedlichen Schwingleistungen beaufschlagt wird. Durch diesen Betriebsmodus wird eine zu starke Erwärmung des Füllmaterials verhindert. Die Frequenz des automatisierten Betriebsmodus zur gepulsten Leistungsabgabe beträgt zumindest 10 Hz, bevorzugt mehr als 50 Hz, besonders bevorzugt zwischen in etwa 90 - 200 Hz.

Bevorzugt schaltet die Steuer- und / oder Regelvorrichtung 14 die Schwingeinheit 3 abwechselnd zwischen einem ersten Zustand, in dem sie Schwingungen abgibt, und einem zweiten Zustand, in dem sie keine Schwingungen abgibt. Besonders bevorzugt schaltet die Steuer- und / oder Regelvorrichtung 14 die Schwingeinheit 3 dazu abwechselnd ein und aus, insbesondere in dem sie Stromzufuhr von der Energiequelle zur Schwingeinheit ein- bzw. ausschaltet. Dazu ist die Steuer- und / oder Regelvorrichtung 14 auch mit der Energiequelle, insbesondere dem Akkumulator 17, verbunden.

Die Steuer- und / oder Regelvorrichtung 14 betreibt die Schwingeinheit auch in dem zweiphasigen Antriebsmodus, wobei die erste Antriebsphase eine im Wesentlichen konstante Leistungsabgabe auf die Füllmasse und die zweite, darauf folgende Phase den automatisierten Modus zur gepulsten Leistungsabgabe umfasst.

Am Handstück 1 ist zumindest ein Steuer- oder Stellelement 15 vorgesehen, das mit der Steuer- und / oder Regelvorrichtung 14 verbunden ist. Mittels dieses zumindest einen Stellelements 15 kann der Anwender Betriebsparameter für die Beleuchtungsvorrichtung 44 und / oder für den Betrieb der Schwingeinheit 3, insbesondere für deren Betrieb im automatisierten Betriebsmodus zur gepulsten Leistungsabgabe, einstellen, auswählen oder verändern oder die Beleuchtungsvorrichtung 44 oder die Schwingeinheit 3 ein- und ausschalten. Das Steuer- oder Stellelement 15 umfasst unter anderem ein für den Anwender einfach zu bedienendes Bedienelement an der Außenhülse 16, zum Beispiel einen Taster oder einen Drehknopf.

Weiter oben wurde die Verwendung des Handstücks 1, 1A in einem Verfahren zur Modellierung von bereits auf eine Präparationsstelle abgegebener Füllmasse beschrieben, bei dem die Schwingeinheit 3 in einem automatisierten Betriebsmodus betrieben wird, bei dem eine gepulste Leistungsabgabe auf die Füllmasse oder auf den Behälter der Füllmasse, insbesondere auf dessen Abgabeende für die Füllmasse, oder auf ein Modellierwerkzeug erfolgt. Es wurde festgestellt, dass die Wirkung des Modellierverfahrens bei Pulsfrequenzen über 500Hz, bevorzugt bei Pulsfrequenzen über 1.000 Hz, deutlich zunimmt. Gemäß einem bevorzugten Ausführungsbeispiel umfasst die Steuer- und / oder Regelvorrichtung 14 daher zumindest zwei Betriebsprogramme zum Betrieb der Schwingeinheit 3. Das erste Betriebsprogramm zur Vermeidung zu starker Erwärmung der Füllmasse betreibt die Schwingeinheit 3 in einem automatisierten Betriebsmodus zur gepulsten Leistungsabgabe mit einer ersten, niedrigen Pulsrate oder Frequenz, von zum Beispiel maximal in etwa 100 Hz. Das zweite Betriebsprogramm zur Modellierung von auf eine Präparationsstelle abgegebener Füllmasse betreibt die Schwingeinheit 3 in einem automatisierten Betriebsmodus zur gepulsten Leistungsabgabe mit einer zweiten, hohen Pulsrate oder Frequenz, von zum Beispiel zumindest in etwa 500 Hz, bevorzugt von zumindest in etwa 1.000 Hz. Zur Auswahl eines der beiden Betriebsprogramme ist ein Steuer- oder Stellelement 15 am Handstück 1, 1A, vorgesehen.

Die Erfindung ist nicht auf die beschriebenen Ausführungsbeispiele beschränkt, sondern umfasst alle Ausführungen, die das prinzipielle, sinngemäße Funktionsprinzip der Erfindung anwenden oder beinhalten. Auch sind alle Merkmale aller beschriebenen und dargestellten Ausführungsbeispiele miteinander kombinierbar.

## Patentansprüche

1. Medizinisches, insbesondere dentales, Handstück (1, 1A) zur Abgabe von Füllmasse auf menschliches oder tierisches Gewebe oder auf Prothesen für menschliches oder tierisches Gewebe mit einer Anschlussvorrichtung (2) für einen Behälter mit Füllmasse, einer Schwingeinheit (3) zur Erzeugung und Übertragung von Schwingungen auf die Füllmasse und einer Fördervorrichtung (4, 4') zur Förderung der Füllmasse aus dem Behälter, **dadurch gekennzeichnet, dass**
die Schwingeinheit (3) einen Schwingungserreger (5) und eine Sonotrode (6) umfasst, wobei die Sonotrode (6) und die Anschlussvorrichtung (2) zum Fördern der Füllmasse aus dem Füllmassebehälter relativ zueinander verschiebbar sind.

2. Medizinisches, insbesondere dentales, Handstück (1, 1 A) nach Anspruch 1, **dadurch**
**gekennzeichnet, dass**
die Sonotrode (6) durch die Fördervorrichtung (4, 4') in Richtung der Anschlussvorrichtung (2) für den Füllmassebehälter verschiebbar ist.

3. Medizinisches, insbesondere dentales, Handstück (1, 1A) nach Anspruch 1 oder 2,
**dadurch gekennzeichnet, dass**
die Anschlussvorrichtung (2) für den Füllmassebehälter und die Sonotrode (6) eine gemeinsame, gerade Mittelachse (7) aufweisen, entlang der die Sonotrode (6) verschiebbar ist, um bevorzugt in die Anschlussvorrichtung (2) einzudringen.

4. Medizinisches, insbesondere dentales, Handstück (1, 1A) nach einem der vorhergehenden Ansprüche, **dadurch gekennzeichnet, dass**
die Schwingeinheit (3) eine einzige Lagerstelle (8) aufweist, wobei bevorzugt der Schwingungserreger (5) einen Schallwandler (9) und eine Gegenmasse (10) umfasst, und die einzige Lagerstelle (8) im Bereich des Schallwandlers (9) vorgesehen ist und eine den Schallwandler (9) umgebende Vergussmasse (11) umfasst.

5. Medizinisches, insbesondere dentales, Handstück (1, 1A) nach einem der vorhergehenden Ansprüche, **gekennzeichnet durch**
eine Energieversorgungseinheit zur Versorgung des Schwingungserregers (5) mit Antriebsenergie, wobei zumindest ein Teil der Energieversorgungseinheit, insbesondere ein elektrisch leitender Kontakt (39) oder eine Leitung, mit dem Schwingungserregers (5) verbunden ist und mit diesem verschiebbar ist.

6. Medizinisches, insbesondere dentales, Handstück (1, 1A) nach einem der vorhergehenden Ansprüche, **dadurch gekennzeichnet, dass**
die Schwingeinheit (3) in einer Gleithülse (12) aufgenommen ist, die gleitend im Handstück (1, 1A) angeordnet ist, wobei zumindest ein Teil der Sonotrode (6) aus der Gleithülse (12) ragt.

7. Medizinisches, insbesondere dentales, Handstück (1, 1A) nach einem der vorhergehenden Ansprüche, **gekennzeichnet durch**
eine die Schwingeinheit (3) fixierende Verdrehsicherung (13).

8. Medizinisches, insbesondere dentales, Handstück (1, 1A) nach einem der vorhergehenden Ansprüche, **dadurch gekennzeichnet, dass**
die Sonotrode (6) zwei voneinander trennbare Teile (6A, 6B) umfasst.

9. Medizinisches, insbesondere dentales, Handstück (1, 1 A) zur Abgabe von Füllmasse auf menschliches oder tierisches Gewebe oder auf Prothesen für menschliches oder tierisches Gewebe mit einer Anschlussvorrichtung (2) für einen Behälter mit Füllmasse, einer Schwingeinheit (3) zur Erzeugung und Übertragung von Schwingungen auf die Füllmasse und einer Fördervorrichtung (4, 4') zur Förderung der Füllmasse aus dem Behälter oder medizinisches, insbesondere dentales, Handstück (1, 1A) nach einem der vorhergehenden Ansprüche, **dadurch**
**gekennzeichnet, dass**
die Schwingeinheit (3) in einem automatisierten Betriebsmodus zur gepulsten Leistungsabgabe auf die Füllmasse betreibbar ist.

10. Medizinisches, insbesondere dentales, Handstück (1, 1A) nach Anspruch 9, **dadurch**
**gekennzeichnet, dass**
die Schwingeinheit (3) zur gepulsten Leistungsabgabe abwechselnd zwischen einem ersten Zustand, in dem sie Schwingungen abgibt, und einem zweiten Zustand, in dem sie keine Schwingungen abgibt, schaltbar ist.

11. Medizinisches, insbesondere dentales, Handstück (1, 1A) nach Anspruch 9 oder 10,
**dadurch gekennzeichnet, dass**
die Schwingeinheit (3) zur gepulsten Leistungsabgabe abwechselnd einschaltbar und ausschaltbar ist.

12. Medizinisches, insbesondere dentales, Handstück (1, 1A) nach Anspruch 9 oder 10,
**dadurch gekennzeichnet, dass**
die Schwingeinheit (3) zur gepulsten Leistungsabgabe abwechselnd mit zwei unterschiedlichen Frequenzen betreibbar ist.

13. Medizinisches, insbesondere dentales, Handstück (1, 1 A) nach einem der Ansprüche
9 - 12, **dadurch gekennzeichnet, dass**
die Schwingeinheit (3) in einem zweiphasigen Antriebsmodus betreibbar ist, wobei die erste Antriebsphase eine im Wesentlichen konstante Leistungsabgabe auf die Füllmasse und die zweite, darauf folgende Phase den automatisierten Modus zur gepulsten Leistungsabgabe umfasst.

14. Medizinisches, insbesondere dentales, Handstück (1, 1A) nach einem der Ansprüche
9 - 13, **dadurch gekennzeichnet, dass**
die Pulsrate des automatisierten Betriebsmodus zur gepulsten Leistungsabgabe zumindest 10 Hz, bevorzugt mehr als 50 Hz, beträgt.

15. Medizinisches, insbesondere dentales, Handstück (1, 1A) nach einem der Ansprüche
9 - 14, **gekennzeichnet durch**
eine Steuer- und / oder Regelvorrichtung (14) zur Steuerung und / oder Regelung des automatisierten Betriebsmodus zur gepulsten Leistungsabgabe, wobei die Steuer- und / oder Regelvorrichtung (14) bevorzugt zumindest ein Stellelement (15) zur Auswahl der Pulsdauer des automatisierten Betriebsmodus zur gepulsten Leistungsabgabe oder zur Auswahl der Pulsrate des automatisierten Betriebsmodus zur gepulsten Leistungsabgabe oder zur Festlegung der Dauer der ersten Antriebsphase oder zur Auswahl der auf die Füllmasse übertragbaren Leistung aufweist.

## Geänderte Patentansprüche

### Geänderte Patentansprüche gemäss Regel 137(2) EPÜ.

**1.** Medizinisches, insbesondere dentales, Handstück (1, 1A) zur Abgabe von Füllmasse auf menschliches oder tierisches Gewebe oder auf Prothesen für menschliches oder tierisches Gewebe mit einer Anschlussvorrichtung (2) für einen Behälter mit Füllmasse, einer Schwingeinheit (3) zur Erzeugung und Übertragung von Schwingungen auf die Füllmasse und einer Fördervorrichtung (4, 4') zur Förderung der Füllmasse aus dem Behälter, **dadurch gekennzeichnet, dass**
die Schwingeinheit (3) einen Schwingungserreger (5) und eine Sonotrode (6) umfasst, wobei die Sonotrode (6) und die Anschlussvorrichtung (2) zum Fördern der Füllmasse aus dem Füllmassebehälter relativ zueinander verschiebbar sind.

**2.** Medizinisches, insbesondere dentales, Handstück (1, 1A) nach Anspruch 1, **dadurch gekennzeichnet, dass**
die Sonotrode (6) durch die Fördervorrichtung (4, 4') in Richtung der Anschlussvorrichtung (2) für den Füllmassebehälter verschiebbar ist.

**3.** Medizinisches, insbesondere dentales, Handstück (1, 1A) nach Anspruch 1 oder 2, **dadurch gekennzeichnet, dass**
die Anschlussvorrichtung (2) für den Füllmassebehälter und die Sonotrode (6) eine gemeinsame, gerade Mittelachse (7) aufweisen, entlang der die Sonotrode (6) verschiebbar ist, um bevorzugt in die Anschlussvorrichtung (2) einzudringen.

**4.** Medizinisches, insbesondere dentales, Handstück (1, 1A) nach einem der vorhergehenden Ansprüche, **dadurch gekennzeichnet, dass**
die Schwingeinheit (3) eine einzige Lagerstelle (8) aufweist, wobei bevorzugt der Schwingungserreger (5) einen Schallwandler (9) und eine Gegenmasse (10) umfasst, und die einzige Lagerstelle (8) im Bereich des Schallwandlers (9) vorgesehen ist und eine den Schallwandler (9) umgebende Vergussmasse (11) umfasst.

**5.** Medizinisches, insbesondere dentales, Handstück (1, 1A) nach einem der vorhergehenden Ansprüche, **gekennzeichnet durch**
eine Energieversorgungseinheit zur Versorgung des Schwingungserregers (5) mit Antriebsenergie, wobei zumindest ein Teil der Energieversorgungseinheit, insbesondere ein elektrisch leitender Kontakt (39) oder eine Leitung, mit dem Schwingungserregers (5) verbunden ist und mit diesem verschiebbar ist.

**6.** Medizinisches, insbesondere dentales, Handstück (1, 1A) nach einem der vorhergehenden Ansprüche, **dadurch gekennzeichnet, dass**
die Schwingeinheit (3) in einer Gleithülse (12) aufgenommen ist, die gleitend im Handstück (1, 1A) angeordnet ist, wobei zumindest ein Teil der Sonotrode (6) aus der Gleithülse (12) ragt.

**7.** Medizinisches, insbesondere dentales, Handstück (1, 1A) nach einem der vorhergehenden Ansprüche, **gekennzeichnet durch**
eine die Schwingeinheit (3) fixierende Verdrehsicherung (13).

**8.** Medizinisches, insbesondere dentales, Handstück (1, 1A) nach einem der vorhergehenden Ansprüche, **dadurch gekennzeichnet, dass**
die Sonotrode (6) zwei voneinander trennbare Teile (6A, 6B) umfasst, wobei bevorzugt ein Sonotrodenteil (6A, 6B) durch die Anschlussvorrichtung (2) aus dem Handstück (1, 1A) entnehmbar ist.

**9.** Medizinisches, insbesondere dentales, Handstück (1, 1A) nach einem der vorhergehenden Ansprüche, **dadurch gekennzeichnet, dass**
die Schwingeinheit (3) in einem automatisierten Betriebsmodus zur gepulsten Leistungsabgabe auf die Füllmasse betreibbar ist.

**10.** Medizinisches, insbesondere dentales, Handstück (1, 1A) nach Anspruch 9, **dadurch gekennzeichnet, dass**
die Schwingeinheit (3) zur gepulsten Leistungsabgabe abwechselnd zwischen einem ersten Zustand, in dem sie Schwingungen abgibt, und einem zweiten Zustand, in dem sie keine Schwingungen abgibt, schaltbar ist.

**11.** Medizinisches, insbesondere dentales, Handstück (1, 1A) nach Anspruch 9 oder 10, **dadurch gekennzeichnet, dass**
die Schwingeinheit (3) zur gepulsten Leistungsabgabe abwechselnd einschaltbar und ausschaltbar ist oder dass die Schwingeinheit (3) zur gepulsten Leistungsabgabe abwechselnd mit zwei unterschiedlichen Frequenzen betreibbar ist.

**12.** Medizinisches, insbesondere dentales, Handstück (1, 1A) nach einem der Ansprüche 9-11, **dadurch gekennzeichnet, dass**
die Schwingeinheit (3) in einem zweiphasigen Antriebsmodus betreibbar ist, wobei die erste Antriebsphase eine im Wesentlichen konstante Leistungsabgabe auf die Füllmasse und die zweite, darauf folgende Phase den automatisierten Modus zur gepulsten Leistungsabgabe umfasst.

**13.** Medizinisches, insbesondere dentales, Handstück (1, 1A) nach einem der vorhergehenden Ansprüche, **dadurch gekennzeichnet, dass**
die Anschlussvorrichtung (2) verschiebbar im Handstück (1, 1A) angeordnet ist.

**14.** Medizinisches, insbesondere dentales, Handstück (1, 1A) nach einem der vorhergehenden Ansprüche, **dadurch gekennzeichnet, dass**
die Sonotrode (6) im Wesentlichen starr und / oder im Wesentlichen über ihre gesamte, sich entlang der Mittelachse (7) ersteckende Länge gerade ausgebildet ist.

**15.** Medizinisches, insbesondere dentales, Handstück (1, 1A) nach einem der vorhergehenden Ansprüche, **gekennzeichnet durch**
eine Beleuchtungsvorrichtung (44) zum Bereitstellen von Strahlung mit einer Wellenlänge und Strahlungsleistung zum Aushärten von Füllmaterial, wobei die Beleuchtungsvorrichtung (44) bevorzugt zumindest eine Leuchtdiode aufweist.
